# EUROPÄISCHE PATENTSCHRIFT

(11) **EP 1 127 402 B1**
(45) Veröffentlichungstag und Bekanntmachung des Hinweises auf die Patenterteilung: **29.01.2003**
(21) Anmeldenummer: 99960796.3
(22) Anmeldetag: 21.10.1999
(51) Int. Cl.: H02M 3/156

(54) **VORRICHTUNG UND VERFAHREN ZUR ENERGIEVERSORGUNG EINER ELEKTRISCHEN LAST**
DEVICE AND METHOD FOR SUPPLYING AN ELECTRICAL CHARGE WITH POWER
DISPOSITIF ET PROCEDE POUR ALIMENTER UNE CHARGE EN ENERGIE

(30) Priorität: 23.10.1998 DE 19848880
(43) Veröffentlichungstag der Anmeldung: 29.08.2001
(73) Patentinhaber: ROBERT BOSCH GMBH, 70442 Stuttgart (DE)
(72) Erfinder: HAULER, Peter, D-76275 Ettlingen (DE); PETTIT, Roderick, 3152 Wantirna (AU); HUGEL, Robert, D-76199 Karlsruhe (DE); WALTHER, Michael, D-71696 Möglingen (DE)
(86) Internationale Anmeldenummer: DE9903376
(87) Internationale Veröffentlichungsnummer: WO00025412

(56) Entgegenhaltungen:
- EP-A- 0 617 499
- DE-A- 1 565 141
- US-A- 5 140 557

## Beschreibung

### Stand der Technik

Die Erfindung geht aus von einer Vorrichtung und einem Verfahren zur Energieversorgung einer elektrischen Last nach der Gattung der unabhängigen Ansprüche. Aus der DE-41 25 860 C1 ist bereits ein Multiplexsystem bekannt, das wenigstens zwei Energieversorgungsleitungen sowie wenigstens eine Datenleitung enthält. Ein erster Teilnehmer enthält ein Schaltmittel, das wenigstens eine Energieversorgungsleitung mit einer Energiequelle verbindet. Während des inaktiven Zustands des Multiplexsystems wird eine Ruheenergiequelle des ersten Teilnehmers über die Datenleitung mit Energie versorgt.

Jeweils die Energieversorgungsleitung und die Datenleitung sind in Abhängigkeit von dem Zustand des Multiplexsystems über separate Schaltmittel mit dem Teilnehmer zu verbinden. Diese Art der Ruhestromversorgung ist aufwendig.

Aus der US-A 5,140,557 ist ein flüchtiger Speicher (RAM) vorgesehen, der zur Reduzierung des Energieverbrauchs im Stand-by-Betrieb über einen Widerstand versorgt wird. Dieser ist so dimensioniert, daß nur ein geringer Strom fließt. Wenn der Speicher aktiviert werden soll, beispielweise zum Schreiben oder Lesen der im Speicher befindlichen Daten, wird ein zum Widerstand parallel verschaltetes Schaltmittel geschlossen.
Die US-A 5,140,557 zeigt jedoch nicht, daß eine Ansteuerschaltung vorgesehen ist, die das Schaltmittel in Abhängigkeit von einem von der Last beeinflußten Wert ansteuert.

### Vorteile der Erfindung

Die erfindungsgemäße Vorrichtung zur Energieversorgung einer elektrischen Last verbindet die elektrische Last über zumindest eine Energieversorgungsleitung und ein Schaltmittel mit einer Energiequelle. Sie zeichnet sich dadurch aus, daß zu dem Schaltmittel ein Umgehungsmittel parallel geschaltet ist, so daß über das Umgehungsmittel die Energiequelle mit der Last elektrisch leitend verbunden ist. Die Parallelschaltung von Schaltmittel und Umgehungsmittel trägt den jeweiligen Vorteilen der Komponenten für unterschiedliche Betriebsfälle Rechnung. Befindet sich die elektrische Last in einer Ruhebetriebsart, so soll sie mit nur geringer elektrischer Energie versorgt werden. Bei der Verwendung eines Widerstands als Umgehungsmittel wird dieser so dimensioniert, daß sich ein ausreichender Ruhestrom einstellt. In dem Ruhebetriebszustand ist das Schaltmittel geöffnet, so daß keine bzw. geringe Energie zur Ansteuerung notwendig ist. Insbesondere bei sogenannten Highside-Schaltem, die mit einer höheren Spannung als der Betriebsspannung angesteuert werden, würde dies nämlich zu einem Strom im mA-Bereich führen. N-Kanal-Transistoren benötigen zur Erzeugung dieser Spannung eine Ladungspumpe mit Oszillator, womit ein relativ hoher Energieverbrauch verbunden ist. Durch die vorgeschlagene Schaltungsanordnung kann auf diese energieintensive Ansteuerung im Ruhebetrieb verzichtet werden, so daß sich ein Ruhestrom für Schaltmittel und Last im µA-Bereich realisieren läßt.

Befindet sich die elektrische Last im Normalbetrieb, wird das Schaltmittel geschlossen. Es steuert damit die Energieversorgung der Last. Das Schaltmittel wird als Sicherungsschalter verwendet, der bei einem detektierten Überlastzustand öffnet und die Last vor übermäßiger Beanspruchung schützt.

In einer zweckmäßigen Weiterbildung ist eine Ansteuerschaltung vorgesehen, die das Schaltmittel in Abhängigkeit von einem von der Last beeinflußten Wert ansteuert. Daduch läßt sich das Schaltmittel an den jeweiligen Betriebszustand der Last in der oben beschriebenen Weise anpassen.

Eine Weiterbildung sieht eine Lastzustandsüberwachung vor, die den von der Last beeinflußten Wert mit einem ersten Grenzwert vergleicht und in Abhängigkeit von dem Vergleich der Ansteuerschaltung ein Betriebszustandssignal zuführt. Überschreitet der erfaßte Wert betragsmäßig den ersten Grenzwert, so wird darauf geschlossen, daß die Last durch einen Aufweckbefehl von dem Ruhebetrieb in den Normalbetrieb übergeht. Das Schaltmittel wird daraufhin geschlossen.

Vorteilhafter Weise ist eine Überwachung vorgesehen, die den von der Last beeinflußten Wert mit einem zweiten Grenzwert vergleicht und in Abhängigkeit von dem Vergleich der Ansteuerschaltung ein Überwachungssignal zuführt. Das Schaltmittel wird im Sinne eines Öffnens angesteuert, wenn der von der Last beeinflußte Wert den zweiten Grenzwert betragsmäßig übersteigt. Diese Bedingung läßt auf ein Überschreiten der als zulässig erkannten Belastungsgrenze schließen, das eine Ansteuerung des Schaltmittels als Schutzvorrichtung für die Last nach sich zieht. Die erfindungsgemäße Vorrichtung trägt bei einem Halbleiterschalter als Schaltmittel dazu bei, den Energieverbrauch im Ruhebetrieb zu senken, indem dann das Schaltmittel deaktiviert ist und der Ruhestrom lediglich über das Umgehungsmittel der elektrischen Last zugeführt wird. Erst im Normalbetrieb erfolgt die Aktivierung des Schaltmittels, um in Form einer elektronischen Sicherung die Last vor Überbeanspruchung zu schützen.

Weitere zweckmäßige Weiterbildungen ergeben sich aus weiteren Ansprüchen und aus der Beschreibung.

### Zeichnung

Ein Ausführungsbeispiel der Erfindung ist in der Zeichnung dargestellt und wird im folgenden näher beschrieben. Es zeigen die Figur 1 ein Blockschaltbild, die Figur 2 eine schaltungstechnische Realisierung sowie Figur 3 einen charakteristischen Signalverlauf des Ausführungsbeispiels.

### Beschreibung des Ausführungsbeispiels

Ein Schaltmittel 10 und ein Umgehungsmittel 12 sind parallel geschaltet. Das Schaltmittel 10 und das Umgehungsmittel 12 sind einerseits mit einer Last 18 und andererseits mit einem ersten Anschluß einer Energiequelle 14 verbunden. Die Last 18 ist gegen Masse geschaltet. Durch die Last 18 fließt ein Strom IL. Ein Maß des Stroms IL wird einer Lastzustandsüberwachung 16 und einer Überstromüberwachung 20 zugeführt, die jeweils einen Masseanschluß aufweisen. Das Eingangssignal der Lastzustandsüberwachung 16 wird mit einem Betriebsstromgrenzwert IBG verglichen. In Abhängigkeit von dem Vergleich erzeugt die Lastzustandsüberwachung 16 ein Betriebszustandssignal 27. Die Überstromüberwachung 20 vergleicht den Eingangswert mit einem Überstromgrenzwert IÜG und erzeugt in Abhängigkeit von dem Vergleich ein Überwachungssignal 28. Betriebszustandssignal 27 und Überwachungssignal 28 sind einer Ansteuerschaltung 22 zugeführt, die als Ausgangssignal ein Ansteuersignal 24 für das Schaltmittel 10 bereitstellt. Ein Statussignal 25 zeigt den Zustand des Schaltmittels 10 an und ist ebenfalls der Ansteuerschaltung 22 zugeführt.

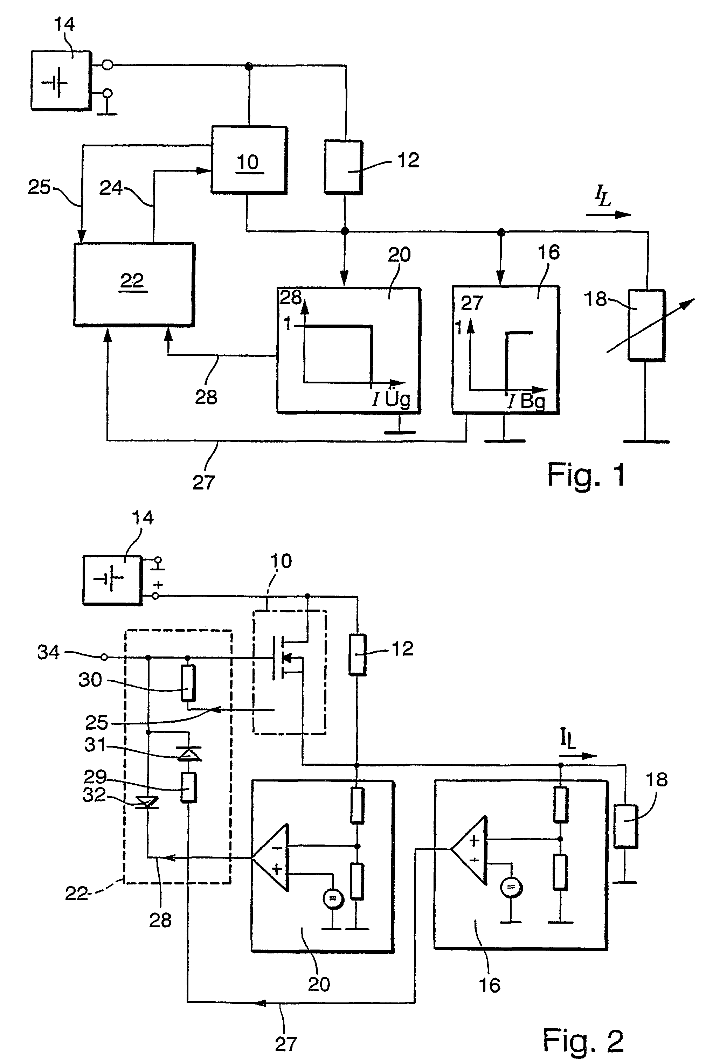

Bei der schaltungstechnischen Realisierung gemäß Figur 2 ist das Schaltmittel 10 als elektronischer Halbleiterschalter ausgeführt. Diesem parallel ist als Umgehungsmittel 12 ein elektrischer Widerstand geschaltet. Das zweite gemeinsame Potential von dem Schaltmittel 10 und dem Umgehungsmittel 12 wird über ein Widerstandsnetzwerk einem in der Lastzustandsüberwachung 16 enthaltenen Komparator zugeführt, der den erfaßten Wert mit einer Referenzspannung vergleicht. Das Ausgangssignal des Komparators der Lastzustandsüberwachung 16 wird über eine erste Diode 31 und einen ersten Koppelwiderstand 29 in den Steuereingang des Schaltmittels 10 eingekoppelt. Das zweite gemeinsame Potential des Schaltmittels 10 und des Umgehungsmittels 12 wird auch bei der Überstromüberwachung 20 über ein Widerstandsnetzwerk dem nicht invertierenden Eingang eines Komparators zugeführt, der diesen Wert mit einem Referenzwert vergleicht. Das Ausgangssignal des Komparators der Überstromüberwachung 20 wird über eine zweite Diode 32 an den Steuereingang des Schaltmittels 10 gelegt. Auf den Steuereingang kann auch über einen externen Anschluß 34 zugegriffen werden. Ein von dem Zustand des Schaltmittels 10 abhängiges Statussignal 25 wird über den zweiten Koppelwiderstand 30 elektrisch leitend dem Steuereingang des Schaltmittels 10 zugeführt.

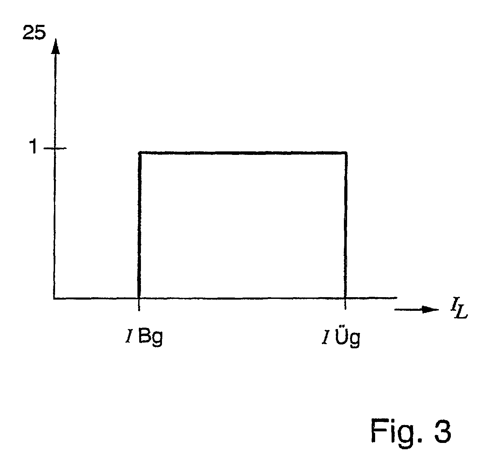

Figur 3 zeigt einen Zustand des Schaltmittels 10 (ein/aus) in Abhängigkeit von dem Strom IL. Bei einem Strom IL kleiner als der Betriebsstromgrenzwert IBG bleibt das Schaltmittel 10 geöffnet, in dem Bereich zwischen Betriebsstromgrenzwert IBG und Überstromgrenzwert IÜG bleibt es geschlossen, bei Überschreiten des Überstromgrenzwerts IÜG wird es geöffnet.

Die beschriebene Vorrichtung dient beispielsweise der Energieversorgung eines in einem Kraftfahrzeug angeordneten Steuergeräts, beispielsweise eines Steuergerätes für ein Schließsystem. Die Last 18 weist hierbei zwei unterschiedliche Betriebszustände auf. Im Ruhebetrieb benötigt die Last 18 zumindest einen Ruhebetriebsstrom, der in der Größenordnung von beispielsweise 100µA liegt. Ein Ruhebetrieb wird dann erkannt, wenn der Strom IL betragsmäßig den Betriebsstromgrenzwert IBG nicht überschreitet. In diesem Betriebszustand ist das Schaltmittel 10 geöffnet. Der Betriebsruhestrom fließt ausschließlich über das Umgehungsmittel 12. Das Umgehungsmittel 12 ist hierbei so zu dimensionieren, daß sich der gewünschte lastabhängige Ruhebetriebsstrom einstellt. Bei Verwendung eines elektrischen Widerstands als Umgehungsmittel 12 liegt dieser beispielsweise in der Größenordnung von 600 Ohm. Im Normalbetrieb benötigt die Last einen Strom IL von beispielsweise 10-20 mA.

Die Lastzustandsüberwachung 16 erfaßt den Strom IL und vergleicht ihn ständig mit dem Betriebsstromgrenzwert IBG. Solange dieser nicht überschritten wird, erzeugt die Ansteuerschaltung 22 ein Ansteuersignal 24, das das Schaltmittel 10 im Sinne eines Öffnens ansteuert. Wird die Last 18 durch ein externes Signal von dem Ruhebetrieb in den Normalbetrieb gebracht, steigt der Strom IL an und überschreitet betragsmäßig den Betriebsstromgrenzwert IBG. Anhand dieser Überschreitung erkennt die Lastzustandsüberwachung 16, daß die Last 18 im Normalbetrieb angesteuert wird. Das Betriebszustandssignal 27 ändert daraufhin den logischen Zustand und bewirkt über die Ansteuerschaltung 22 und das Ansteuersignal 24 ein Schließen des Schaltmittels 10. Damit versorgt die Energiequelle 14 die Last 18 im wesentlichen über das Schaltmittel 10. Im Normalbetrieb wirkt das Schaltmittel 10 in Verbindung mit der Überstromüberwachung 20 und der Ansteuerschaltung 22 als elektronische Sicherung. Die Überstromüberwachung 20 erfaßt den Strom IL und vergleicht ihn mit dem Überstromgrenzwert IÜG. Der Überstromgrenzwert IÜG ist hierbei als für die Last 18 maximal zulässiger Strom IL gewählt. Überschreitet der Strom IL den Überstromgrenzwert IÜG betragsmäßig, so ändert das Überwachungssignal 28 seinen logischen Zustand und bewirkt in der Verbindung mit der Ansteuerschaltung 22 und dem Ansteuersignal 24 ein Öffnen des Schaltmittels 10. Damit wird der mit Überschreiten des Überstromgrenzwerts IÜG kritische Strom IL unterbunden. Das Schaltmittel 10 ist damit in der in Figur 3 gezeigten Weise angesteuert.

Vorstehend beschriebene Funktionsweise läßt sich beispielsweise mit der Schaltungsanordnung gemäß Figur 2 realisieren. Die Lastzustandsüberwachung 16 kann durch die gezeigte Komparatorschaltung realisiert werden. Solange das als Maß für den Strom IL abgegriffene Spannungsniveau, das dem invertierenden Komparatoreingang zugeführt wird, nicht die den Betriebsstromgrenzwert IBG abbildende Referenzspannung übersteigt, so ist der über die erste Diode 31 und den zweiten Koppelwiderstand 30 zugeführte Signalpegel "Low", das Schaltmittel 10 bleibt dadurch geöffnet. Das Statussignal 25 weist daher ebenfalls einen "Low"-Pegel auf. Das binäre Statussignal 25 ist bei einigen Halbleiterschaltern als zusätzliche Funktion integriert und signalisiert, in welchem Zustand (offen/geschlossen) sich das Schaltmittel 10 befindet. Wird das Statussignal 25 über den zweiten Koppelwiderstand 30 an den Steuereingang zurückgekoppelt, so wird das Schaltmittel 10 in dem AusZustand gehalten. Dadurch läßt sich in einfacher Weise eine Verriegelungsfunktion realisieren.

Überschreitet der Strom IL den Betriebsstromgrenzwert IBG, nimmt das Betriebszustandssignal 27 einen "High"-Pegel an, so daß das Schaltmittel 10 im Sinne eines Schließens angesteuert wird. Der Statusausgang 25 nimmt ebenfalls "High"-Potential an und schaltet durch die Rückkopplung über den zweiten Koppelwiderstand 30 das Schaltmittel 10 dauerhaft ein.

Überschreitet der Strom IL den Überstromgrenzwert IÜG, ändert das Überwachungssignal 28 seinen logischen Zustand. Das so am Steuereingang anliegende Potential bewirkt das Öffnen des Schaltmittels 10. Dieser Zustand wird so lange beibehalten, als der Strom IL den Überstromgrenzwert IÜG überschreitet. Bei der Detektion eines Überstroms geht das Statussignal 25 wieder auf "Low"-Pegel. Dem "Low"-Pegel folgt der Steuereingang und schaltet die Last 18 ab. Das Statussignal 25 nimmt daraufhin wieder "High"-Potential an und würde ein Schließen des Schaltmittels 10 bewirken, wenn nicht das Überschreiten des Überstromgrenzwerts IÜG in Verbindung mit dem Überwachungssignal 28 dies verhindert.

Als Schaltmittel 10 kann ein bekannter Leistungs-Feldeffekt-Transistor verwendet werden, in dem schon Überwachungs-und Ansteuerfunktionen integriert sind. Insbesondere n-Kanal-Transistoren und Highside-Schalter können bei der vorgeschlagenen Anordnung als Schaltmittel 10 eingesetzt werden, ohne daß die Energiequelle 14 im Ruhebetrieb wesentlich belastet würde. Wichtig ist eine Ansteuerung des Schaltmittels 10 in Abhängigkeit von der Lastzustandsüberwachung 16.

Zur Betriebszustands- und Überstromüberwachung könnte auch die an der Last 18 abfallende Spannung direkt ausgewertet werden. Ein Spannungseinbruch signalisiert beispielsweise den Wechsel von dem Ruhebetrieb in den Normalbetrieb. Die Grenzwerte sind entsprechend anzupassen. Die grundsätzliche Funktionsweise bleibt davon jedoch unberührt.

## Patentansprüche

1. Vorrichtung zur Energieversorgung einer elektrischen Last, wobei die elektrische Last (18) über zumindest eine Energieversorgungsleitung und ein Schaltmittel (10) mit einer Energiequelle (14) verbunden werden kann, wobei dem Schaltmittel (10) ein Umgehungsmittel (12) parallel geschaltet ist, so dass über das Umgehungsmittel (12) die Energiequelle (14) mit der Last (18) elektrisch leitend verbunden ist, wobei das Umgehungsmittel (12) so dimensioniert ist, dass in einem Ruhebetrieb bei geöffnetem Schaltmittel (10) über das Umgehungsmittel (12) ein Ruhestrom fliesst, der die Last (18) in einem Ruhebetrieb versorgt, **dadurch gekennzeichnet, dass** eine Ansteuerschaltung (22) vorgesehen ist, die das Schaltmittel (10) in Abhängigkeit von einem von der Last (18) beeinflussten Wert (IL) ansteuert.

2. Vorrichtung nach einem der vorhergehenden Ansprüche, **dadurch gekennzeichnet, daß** eine Lastzustandsüberwachung (16) vorgesehen ist, die den Wert (IL) mit einem ersten Grenzwert (IBG) vergleicht und in Abhängigkeit von dem Vergleich der Ansteuerschaltung (22) ein Betriebszustandssignal (27) zuführt.

3. Vorrichtung nach einem der vorhergehenden Ansprüche, **dadurch gekennzeichnet, daß** eine Überwachung (20) vorgesehen ist, die den Wert (IL) mit einem zweiten Grenzwert (IÜG) vergleicht und in Abhängigkeit von dem Vergleich der Ansteuerschaltung (22) ein Überwachungssignal (28) zuführt.

4. Vorrichtung nach einem der vorhergehenden Ansprüche, **dadurch gekennzeichnet, daß** das Schaltmittel (10) im Sinne eines Schließens angesteuert ist, wenn der Wert (IL) den ersten Grenzwert (IBG) betragsmäßig übersteigt und/oder das Schaltmittel (10) im Sinne eines Öffnens angesteuert ist, wenn der Wert (IL) den zweiten Grenzwert (IBÜ) betragsmäßig übersteigt.

5. Vorrichtung nach einem der vorhergehenden Ansprüche, **dadurch gekennzeichnet, daß** ein den Zustand des Schaltmittels (10) erfassendes Statussignal (25) der Ansteuerschaltung (20) zugeführt ist.

6. Vorrichtung nach einem der vorhergehenden Ansprüche, **dadurch gekennzeichnet, daß** als Schaltmittel (10) ein n-Kanal-Transistor als Highside-Schalter vorgesehen ist.

7. Verfahren zur Energieversorgung einer elektrischen Last, wobei die elektrische Last (18) über zumindest eine Energieversorgungsleitung und ein Schaltmittel (10) im Normalbetrieb mit einer Energiequelle verbunden wird, wobei dem Schaltmittel (10) ein Umgehungsmittel (12) parallel geschaltet ist, so dass über das Umgehungsmittel (12) die Energiequelle (14) mit der Last (18) elektrisch leitend verbunden wird, wobei in einem Ruhebetrieb das Schaltmittel (10) geöffnet wird, so dass zur Versorgung der Last (18) ein Ruhestrom über das Umgehungsmittel (12) fliesst, **dadurch gekennzeichnet, dass** ein charakteristischer Wert (IL) der Last (18) erfasst und mit einem Grenzwert (IBG, IÜG) verglichen und abhängig von dem Vergleich das Schaltmittel (10) angesteuert wird.

8. Verfahren nach einem der Ansprüche 8 oder 9, **dadurch gekennzeichnet, daß** das Schaltmittel (10) geschlossen wird, wenn der Wert (IL) einen ersten Grenzwert (IBG) betragsmäßig überschreitet und/oder das Schaltmittel (10) geöffnet wird, wenn der Wert (IL) einen zweiten Grenzwert (IÜG) betragsmäßig überschreitet.

## Claims

1. Device for supplying an electrical load with power, the electrical load (18) being able to be connected to a power source (14) via at least one power supply line and a switching means (10), a bypass means (12) being connected in parallel with the switching means (10), so that the power source (14) is electrically conductively connected to the load (18) via the bypass means (12), the bypass means (12) being dimensioned in such a way that, in a quiescent mode, with the switching means (10) open, a quiescent current flows via the bypass means (12) and supplies the load (18) in a quiescent mode, **characterized in that** a drive circuit (22) is provided, which drives the switching means (10) in a manner dependent on a value (IL) influenced by the load (18).

2. Device according to one of the preceding claims, **characterized in that** a load state monitoring (16) is provided, which compares the value (IL) with a first limit value (IBG) and feeds an operating state signal (27) to the drive circuit (22) in a manner dependent on the comparison.

3. Device according to one of the preceding claims, **characterized in that** a monitoring (20) is provided, which compares the value (IL) with a second limit value (IÜG) and feeds a monitoring signal (28) to the drive circuit (22) in a manner dependent on the comparison.

4. Device according to one of the preceding claims, **characterized in that** the switching means (10) is driven in the sense of closing if the magnitude of the value (IL) exceeds the first limit value (IBG) and/or the switching means (10) is driven in the sense of opening if the magnitude of the value (IL) exceeds the second limit value (IBÜ).

5. Device according to one of the preceding claims, **characterized in that** a status signal (25) registering the state of the switching means (10) is fed to the drive circuit (20).

6. Device according to one of the preceding claims, **characterized in that** an n-channel transistor as highside switch is provided as the switching means (10).

7. Method for supplying an electrical load with power, the electrical load (18) being connected to a power source via at least one power supply line and a switching means (10) during normal operation, a bypass means (12) being connected in parallel with the switching means (10) so that the power source (14) is electrically conductively connected to the load (18) via the bypass means (12), the switching means (10) being opened in a quiescent mode so that a quiescent current flows via the bypass means (12) in order to supply the load (18), **characterized in that** a characteristic value (IL) of the load (18) is registered and compared with a limit value (IBG, IÜG) and the switching means (10) is driven depending on the comparison.

8. Method according to either of Claims 8 and 9, **characterized in that** the switching means (10) is closed if the magnitude of the value (IL) exceeds a first limit value (IBG) and/or the switching means (10) is opened if the magnitude of the value (IL) exceeds a second limit value (IÜG).

## Revendications

1. Dispositif pour alimenter en énergie une charge électrique, dans lequel :
- la charge électrique (18) peut être reliée par au moins un conducteur d'alimentation en énergie et un moyen de contact (10) à une source d'énergie (14),
- un moyen de by-pass (12) est monté en parallèle avec le moyen de contact (10) de sorte qu'il relie électriquement la source d'énergie (14) à la charge (18), et le by-pass (12) est dimensionné de manière qu'en fonctionnement de repos quand le moyen de contact (10) est ouvert, dans le moyen de by-pass (12) passe un courant de repos qui alimente la charge (18),
**caractérisé en ce qu'**
il comporte un circuit de commande (22) qui commande le moyen de contact (10) en fonction d'une valeur (IL) qui est sous l'influence de la charge (18).

2. Dispositif selon la revendication 1,
**caractérisé en ce qu'**
il est prévu une surveillance (16) de l'état de la charge, qui compare la valeur (IL) à une première valeur limite (IBG) et qui, en fonction de cette comparaison, envoie un signal d'état de fonctionnement (27) au circuit de commande (22).

3. Dispositif selon l'une quelconque des revendications 1 ou 2,
**caractérisé en ce qu'**
il est prévu une surveillance (20) qui compare la valeur (IL) à une seconde valeur limite (IÜG) et qui en fonction de la comparaison envoie un signal de surveillance (28) au circuit de commande (22).

4. Dispositif selon l'une quelconque des revendications précédentes,
**caractérisé en ce que**
le moyen de contact (10) est commandé dans le sens de fermeture quand la valeur (IL) dépasse la première valeur limite (IBG) et/ou le moyen de contact (10) est commandé dans le sens d'ouverture quand la valeur (IL) dépasse la seconde valeur limite (IÜG).

5. Dispositif selon l'une quelconque des revendications précédentes,
**caractérisé en ce qu'**
un signal d'état (25) représentant l'état du moyen de contact (10) est envoyé au circuit de commande (22).

6. Dispositif selon l'une quelconque des revendications précédentes,
**caractérisé en ce que**
comme moyen de contact (10), il est prévu un transistor à canal n en tant que contacteur highside.

7. Procédé pour alimenter en énergie une charge électrique, selon lequel :
- la charge électrique (18) peut être reliée par au moins un conducteur d'alimentation en énergie et un moyen de contact (10) à une source d'énergie (14),
- un moyen de by-pass (12) est monté en parallèle avec le moyen de contact (10) de sorte qu'il relie électriquement la source d'énergie (14) à la charge (18), le moyen de contact (10) étant ouvert en fonctionnement de repos, de sorte que dans le moyen de by-pass (12) passe un courant de repos qui alimente la charge (18),
**caractérisé en ce qu'**
une valeur caractéristique (IL) de la charge est détectée et comparée à une valeur limite (IBG, IÜG) et, en fonction de cette comparaison, le moyen de contact (10) est commandé.

8. Procédé selon la revendication 7,
**caractérisé en ce que**
le moyen de contact (10) est fermé quand la valeur (IL) dépasse une première valeur limite (IBG) et/ou le moyen de contact (10) est ouvert quand la valeur (IL) dépasse une seconde valeur limite (IÜG).
